## Europäisches Patentamt

## European Patent Office

## Office européen des brevets

(19)

(11) Veröffentlichungsnummer : **0 097 165**
**B1**

(12)                    EUROPÄISCHE PATENTSCHRIFT

(45) Veröffentlichungstag der Patentschrift :
28.05.86

(51) Int. Cl.⁴ : **B 60 P   1/54**

(21) Anmeldenummer : **82903290.3**

(22) Anmeldetag : **18.11.82**

(86) Internationale Anmeldenummer :
**PCT/AT 82/00033**

(87) Internationale Veröffentlichungsnummer :
**WO/8302258 (07.07.83 Gazette 83/16)**

(54) ANHÄNGER FÜR EINEN LASTKRAFTWAGEN.

(30) Priorität : **24.12.81 AT 5562/81**

(43) Veröffentlichungstag der Anmeldung :
**04.01.84 Patentblatt 84/01**

(45) Bekanntmachung des Hinweises auf die Patenterteilung : **28.05.86 Patentblatt 86/22**

(84) Benannte Vertragsstaaten :
**AT CH DE FR LI SE**

(56) Entgegenhaltungen :
**AT-A-   186 392
CA-A-   957 329
FR-A- 2 320 208
FR-A- 2 344 219
US-A- 3 342 357**

(73) Patentinhaber : **FIRMA PALFINGER
Vogelweiderstrasse 40a
A-5020 Salzburg (AT)**

(72) Erfinder : **PALFINGER, Richard
Morzgastrasse 3
A-5020 Salzburg (AT)**

(74) Vertreter : **Hofinger, Engelbert et al
Torggler-Hofinger Wilhelm-Greil-Strasse 16
A-6020 Innsbruck (AT)**

**Beschreibung**

Die Erfindung bezieht sich auf einen Anhänger für einen Lastkraftwagen, mit einem Traggestell für einen Ladekran od. dgl., wobei der Anhänger wahlweise gelenkig oder starr mit dem Lastkraftwagen verbindbar bzw. von diesem lösbar ist.

Charakteristik des bekannten Standes der Technik

Bei der Befestigung eines Ladekrans am hinteren Ende eines Lastfahrzeuges können in zweierlei Hinsicht Probleme entstehen : zunächst ist einzusehen, daß durch die Betätigung des Ladekrans erhebliche Momente auf das Fahrzeug übertragen werden, zu deren Aufnahme es nicht eingerichtet ist. Allein die Lasten, die ein typischer Kran zu tragen vermag, liegen im Tonnenbereich und Schwenkmomente über 10 kNm sind durchaus üblich. Befindet sich die Last vor der Kransäule, können solche Momente durchaus vom Fahrzeug selbst aufgenommen werden. Bei seitlicher Ausschwenkung entlasten üblicherweise seitlich ausfahrbare Tragholme das Fahrzeug. Zur Abstützung der Fahrzeugkonsole nach hinten ist auch bereits (vgl. AT-A-186 392) ein Stützrad, das mittels mindestens eines nach hinten weisenden, in der Arbeitsstellung durch eine Halteeinrichtung von oben abgestützten und fixierten Schwenkarmes an einer quer zur Fahrzeugrichtung verlaufenden Achse angelenkt ist, vorgeschlagen worden. Das Stützrad erlaubt jedoch nur geringfügige Verschiebungen des Fahrzeuges am Einsatzort und löst nicht das zweite Problem, das durch die Anordnung eines Ladekrans im Heckbereich des Fahrzeuges entsteht. Dieses liegt darin, daß das Eigengewicht des Krans in der Größenordnung von 1-2 t den Achsdruck auf die Hinterräder in unzulässigem Ausmaß erhöht und besonders beim Bergauffahren die Vorderräder übermäßig entlastet. Diese letztgenannte Schwierigkeit ist dafür verantwortlich, daß Ladekräne bisher von einem Anwendungsgebiet ausgeschlossen sind, für das sie an sich prädestiniert wären, nämlich von der Verwendung im Zusammenhang mit Fahrmischern für Beton. Zusätzlich zum Fahrmischer werden hier Förderbänder eingesetzt oder eigene Pumpwagen, die gesondertes Bedienungspersonal benötigen und damit gerade bei kleineren Bauvorhaben die Betonkosten in die Höhe treiben. Hier könnten Ladekräne Abhilfe schaffen, deren Förderleistung von etwa 0,5 m³ Beton pro Hub eine hinreichend rasche Entladung zu variablen Endpunkten erlaubt und die vom Fahrer des Mischfahrzeuges betätigt werden könnten. Die Auslegung der Fahrmischer erfolgt nun aber so, daß die zusätzliche Anbringung eines schweren Ladekrans am Fahrzeugheck nicht ohne weiteres möglich ist.

Aus dem Gesagten ergibt sich, daß ein Bedarf an Anhängern bestand, welche die wahlweise Mitnahme schwerer Ladekräne ermöglichen, ohne das Fahrverhalten des Zugfahrzeuges wesentlich zu beeinträchtigen und welche bei stillstehendem Zugfahrzeug eine solide Unterlage für ein Arbeitswerkzeug, insbesondere für einen Ladekran, bilden. Ein solcher Anhänger mit den eingangs skizzierten Merkmalen wurde bereits in FR-A-2 320 208 vorgeschlagen. Dabei ist jedoch am Anhänger einerseits eine Konsole vorgesehen, welche in üblicher Weise starr mit dem Zugfahrzeug verbindbar ist, andererseits ein ausziehbarer Balken, der gelenkig in eine am Zugfahrzeug vorgesehene Kupplung eingehängt werden kann, wenn die Konsole nicht mehr mit dem Zugfahrzeug verbunden ist. Die starre Verbindung von Konsole und Zugfahrzeug erfolgt hier immer in der gleichen Weise, ohne daß eine Möglichkeit bestünde, Bodenunebenheiten zu berücksichtigen. Es kann daher nicht darauf vertraut werden, daß die Räder des Anhängers in der Arbeitsphase als Stützen für die Konsole fungieren. Um ein Hochkippen des Vorderteiles des Zugfahrzeuges durch den arbeitenden Kran zu verhindern, müssen daher ausfahrbare Stützen vorgesehen werden, welche die Räder des Anhängers völlig entlasten. Die ganze Konstruktion wird daher so umständlich, daß sie in die Praxis keinen Eingang gefunden hat.

Aufgabe der Erfindung

Aufgabe der Erfindung ist es, einen Anhänger der eingangs skizzierten Art zu schaffen, der einfach im Aufbau ist und dessen Räder in der Arbeitsstellung auch auf unebenem Boden fest aufruhen, ohne daß die Bodenunebenheiten ein auf das Zugfahrzeug wirkendes Kippmoment verursachen.

Darlegung des Wesens der Erfindung

Die gestellte Aufgabe wird dadurch gelöst, daß eine starr aber lösbar mit einer vertikalen Platte am Ende des Lastkraftwagens verbindbare Befestigungseinrichtung eine vertikale Schwenkachse für den Anhänger trägt, um deren eines Ende eine horizontale Schwenkachse für das Traggestell schwenkbar ist, und daß zum Blockieren der Schwenkbewegung um die horizontale Achse eine vom Tragestell zum anderen Ende der vertikalen Achse verlaufende und um diese schwenkbare, in verschiedenen Stellungen fixierbare Hydraulikeinheit vorgesehen ist.

Gemäß der Erfindung erfolgt also die Verbindung des Anhängers mit dem Endteil des Lastkraftwagens immer in der etwa aus FR-A-2 320 208 oder in eleganterer Form aus AT-A-315 422 bekannten Weise. Während der Fahrt ist der Anhänger gegenüber seinem am Endteil des Lastkraftwagens starr befestigten Teil verschwenkbar, bei Vorwärtsfahrt laufen die Räder dem Lastkraftwagen nach, bei Rückwärtsfahrt bildet sich in üblicher Weise ein Winkel zwischen Lastkraftwagen und Anhänger.

Durch die Schwenkbarkeit des Traggestelles für den Ladekran um eine horizontale Achse können die daran befestigten Räder auch größeren Bodenunebenheiten folgen. Die Fixierung des Traggestelles relativ zum Lastkraftwagen, die im Betriebszustand unerläßlich ist, kann damit auch in einer Lage erfolgen, in welcher der Boden des Traggestells nicht völlig parallel zu jenem des Lastkraftwagens verläuft.

An sich zeigt bereits US-A-4 200 315 ein Zugfahrzeug, an welchem ein Anhänger, der einen Ladekran trägt, horizontal und vertikal verschwenkbar ist. Dabei handelt es sich jedoch um ein Sonderfahrzeug, bei dem das Problem, ein Widerlager für die Hydraulikeinheit zu finden, welche den Anhänger in der lotrechten Ebene fixiert, dadurch gelöst wird, daß die horizontal verlaufende Schwenkachse vor der vertikalen Schwenkachse angeordnet wird und ein Teil des Zugfahrzeuges das Widerlager bildet. Diese Lösung ist bei einem Anhänger, der wahlweise trennbar mit einem gewöhnlichen Lastkraftwagen verbunden werden soll, nicht verwendbar. Ganz abgesehen davon hat sie den Nachteil, daß bei lotrechten Belastungen ein Durchknicken der vom Fahrzeug distanzierten, lotrecht verlaufenden Schwenkachse zu befürchten ist.

Beschreibung der Zeichnungsfiguren

In der Zeichnung wird ein Ausführungsbeispiel der Erfindung beschrieben, wobei
Figur 1 einen Vertikalschnitt durch die Längsmittelebene,
Figur 2 eine Draufsicht auf einen erfindungsgemäßen Anhänger darstellt, und
Figur 3 das zugehörige hydraulische Schaltbild skizziert.

Beschreibung des bevorzugten Ausführungsbeispiels

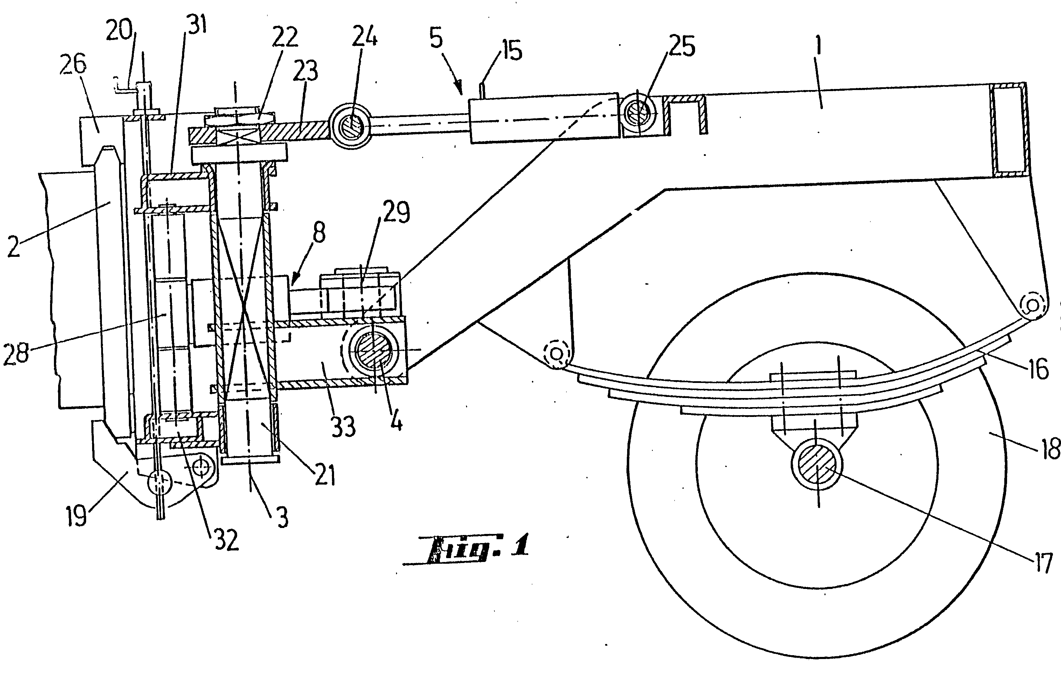

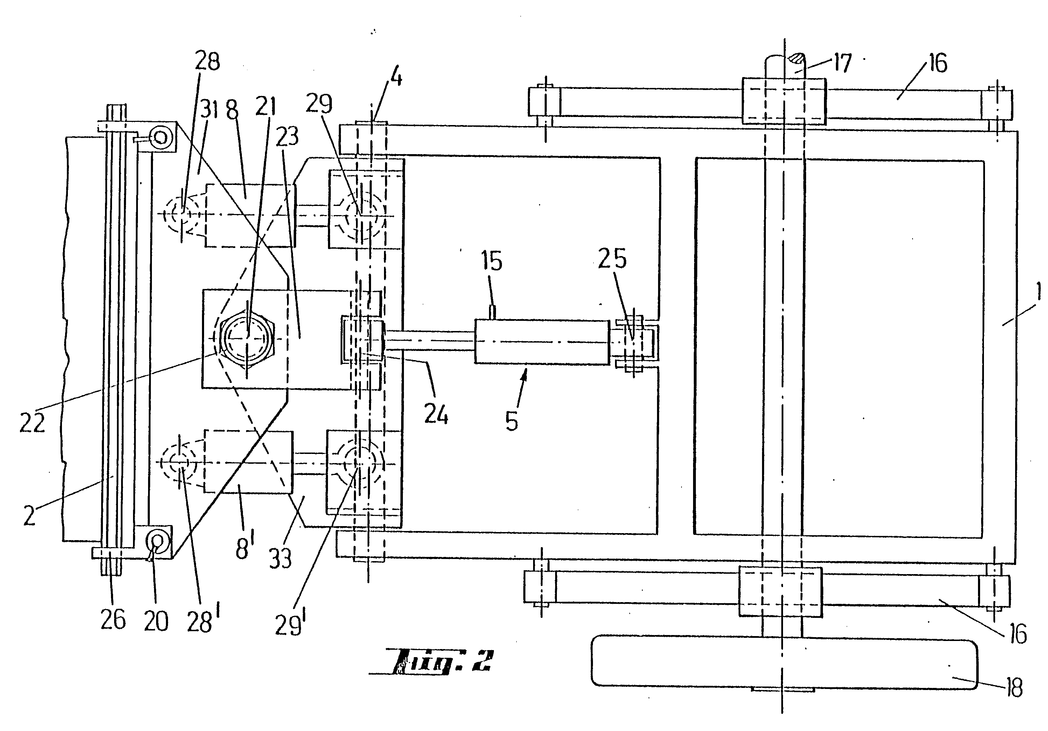

Der in Fig. 1 und 2 dargestellte Anhänger ist dazu bestimmt, auf dem Traggestell 1, dessen Details hier nicht von Bedeutung sind, insbesondere einen Ladekran aufzunehmen. Der Anhänger soll von einem Lastfahrzeug an die Einsatzstelle des Ladekrans gebracht werden können, und während der Funktion des Ladekrans soll durch eine starre Verbindung zwischen Anhänger und Lastfahrzeug ein Kippen des Anhängers ausgeschlossen werden. Entscheidend für die Funktion der dargestellten Einrichtung ist somit die Art der Verbindung zwischen Anhänger und Lastfahrzeug.

Zur Verbindung mit dem Anhänger weist das nicht dargestellte Lastfahrzeug lediglich eine vertikale Rüstplatte 2 auf. In diese greift die Halteeinrichtung des Anhängers oben mit Haltepratzen 26 und unten mit Klauen 19 ein. Die Klauen 19 können über einen Betätigungshebel 20 mittels einer Spindel geöffnet und geschlossen werden, sodaß der Anhänger mit dem Lastfahrzeug wahlweise starr verbindbar bzw. von diesem lösbar ist. Um ein seitliches Ausschwenken des Anhängers zu ermöglichen, ist in den Platten 31 und 32 der Befestigungsvorrichtung ein Achszapfen 21 gelagert, um welchen die Platte 33 horizontal verschwenkbar ist. Am oberen Ende des Achszapfens 21 ist mittels einer Mutter 22 eine Halterung 23 für eine Hydraulikeinheit 5 befestigt, damit die Hydraulikeinheit 5, deren Funktion später erläutert wird, die Bewegung des Anhängers um die vertikale Achse 3 mitmachen kann.

Der einachsige Anhänger selbst besteht aus dem Traggestell 1, der Federung 16 und zwei auf der Radachse 17 gelagerten Rädern 18 und weist insofern keine erfindungswesentlichen Besonderheiten auf. Wesentlich ist, daß das von den Rädern 18 getragene Traggestell 1 um eine quer verlaufende horizontale Achse 4 schwenkbar ist und daß diese Schwenkbewegung in der Arbeitsstellung des Ladekrans blockiert werden kann. Diesem Zweck dient die Hydraulikeinheit 5, die in den Punkten 24 und 25 einerseits an der Halteplatte 23, andererseits am Traggestell 1 angelenkt ist. Wird der Absperrhahn 15 geschlossen, so ist die gegenseitige Stellung der Teile der Hydraulikeinheit 5 fixiert und das Traggestell 1 ist mit dem Ende des Kraftfahrzeuges starr verbunden, sodaß dieses zusammen mit den Rädern 18 die vom Ladekran ausgeübten Momente aufnehmen kann.

Wie besonders aus Fig. 2 ersichtlich ist, kann auch die horizontale Schwenkbewegung des Anhängers unterbunden werden, was insbesondere für das Rückwärtsfahren vorteilhaft ist. Der Anhänger ist zu diesem Zweck mit Hydraulikeinheiten 8, 8' versehen, die an den Punkten 28, 28' und 29, 29' einerseits an der Befestigungseinrichtung, nämlich an sich zwischen den Platten 31 und 32 erstreckenden Schäften, andererseits an der horizontal schwenkbaren Platte 33 angelenkt sind.

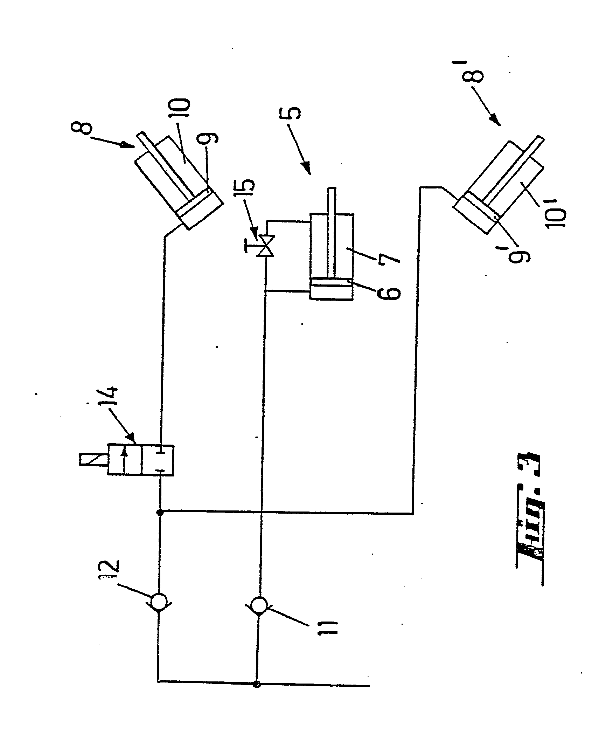

Aus Fig. 3 ist ersichtlich, durch welche Schaltvorgänge die verschiedenen Funktionen der erfindungsgemäßen Anhängerkupplung erzielbar sind. Die Darstellung in Fig. 3 entspricht dabei in bezug auf die Hydraulikeinheiten 8, 8' jenem Zustand, in welchem eine horizontale Bewegung des Anhängers blockiert ist. Da der Schalter 14 unterbrochen ist, kann aus dem Zylinder 10 kein Öl abfließen und der Kolben 9 ist unbeweglich. Dasselbe gilt für die Zylinder 10' und den Kolben 9', wegen der Anordnung des Rückschlagventils 12. Um die horizontale Bewegung des Anhängers freizugeben, genügt es, den Schalter 14 zu betätigen, woraufhin zwischen den Zylindern 10 und 10' Drucköl ausgetauscht werden kann, sodaß die Bewegung der Kolben 9, 9' und damit die Bewegung der Platte 33 bzw. des Anhängers nicht mehr behindert ist.

Bei Vorwärtsfahrt des Anhängers ist der Absperrhahn 15 geöffnet, die Hydraulikflüssigkeit steht somit zu beiden Seiten des Kolbens 6 der Hydraulikeinheit 5 an, womit dieser im Zylinder 7 eine gedämpfte Bewegung ausführen kann. Schließt man hingegen den Absperrhahn 15, wird der Kolben 6 unbeweglich, da aus dem Raum vor dem Kolben der Absperrhahn 15, aus dem Raum hinter diesem das Rückschlagventil 11, ein Abfließen der Hydraulikflüssigkeit verhindern.

**Patentansprüche**

1. Anhänger für einen Lastkraftwagen, mit einem Traggestell (1) für einen Ladekran od. dgl., wobei der Anhänger wahlweise gelenkig oder starr mit dem Lastkraftwagen verbindbar bzw. von diesem lösbar ist, dadurch gekennzeichnet, daß eine starr aber lösbar mit einer vertikalen Platte (2) am Ende des Lastkraftwagens verbindbare Befestigungseinrichtung (31, 32) eine vertikale Schwenkachse (3) für den Anhänger trägt, um deren eines Ende eine horizontale Schwenkachse (4) für das Traggestell (1) schwenkbar ist, und daß zum Blockieren der Schwenkbewegung um die horizontale Achse (4) eine vom Traggestell (1) zum anderen Ende der vertikalen Achse (3) verlaufende und um diese schwenkbare, in verschiedenen Stellungen fixierbare Hydraulikeinheit (5) vorgesehen ist.

2. Anhänger nach Anspruch 1, dadurch gekennzeichnet, daß die horizontale Schwenkachse (4) hinter dem unteren Endbereich der vertikalen Schwenkachse (3) angeordnet ist und die Hydraulikeinheit (5) etwa horizontal zwischen Traggestell (1) und oberem Ende der vertikalen Schwenkachse (3) verläuft.

3. Anhänger nach Anspruch 1 oder 2, dadurch gekennzeichnet, daß auch zwischen den relativ zueinander um die Vertikale Achse (3) schwenkbaren Teilen des Anhängers wenigstens eine Hydraulikeinheit (8, 8') vorgesehen ist, bei welcher die gegenseitige Lage von Kolben (9, 9') und Zylinder (10, 10') fixierbar ist.

**Claims**

1. Trailer for a truck, having a supporting frame (1) for a loading crane or the like, the trailer selectively being flexibly or rigidly connectable to the truck or removable from said truck, characterized in that fastening means (31, 32) rigidly and detachably connectable to a vertical plate (2) at the end of the truck supports a vertical pivot shaft (3) for the trailer, a horizontal pivot shaft (4) for the supporting frame (1) being pivotable about one end of said vertical shaft, and that for blocking the pivoting motion about the horizontal shaft (4), a hydraulic unit (5) extending from the supporting frame (1) to the other end of the vertical shaft (3) and pivotable thereabout and fixable in different positions is provided.

2. Trailer according to claim 1, characterized in that the horizontal pivot shaft (4) is arranged behind the lower end region of the vertical pivot axis (3), and that the hydraulic unit (5) extends substantially horizontally between supporting frame (1) and the upper end of the vertical pivot shaft (3).

3. Trailer according to claim 1 or 2, characterized in that also between the parts of the trailer pivotable about the vertical shaft (3) relative to one another, at least one hydraulic unit (8, 8') is provided in which the mutual position of piston (9, 9') and cylinder (10, 10') is fixable.

**Revendications**

1. Remorque pour camion, comportant un châssis porteur (1) pour une grue de chargement ou analogue, étant précisé que la remorque peut, au choix, être reliée, par articulation ou rigidement, au camion ou en être séparée, caractérisée en ce qu'un dispositif de fixation (31, 32), qui peut être relié, rigidement mais de façon amovible, à une plaque verticale (2) située à l'extrémité du camion, porte un axe vertical d'oscillation (3) pour la remorque, autour de l'une des extrémités duquel peut osciller un axe horizontal d'oscillation (4) pour le châssis porteur (1), et en ce que, pour bloquer le mouvement d'oscillation autour de l'axe horizontal (4), il est prévu un vérin hydraulique (5) qui va du châssis porteur (1) à l'autre extrémité de l'axe vertical (3), qui peut osciller autour de cet axe et qui peut se bloquer en différentes positions.

2. Remorque selon la revendication 1, caractérisée en ce que l'axe horizontal d'oscillation (4) est disposé derrière la zone d'extrémité inférieure de l'axe vertical d'oscillation (3), et en ce que le vérin hydraulique (5) court à-peu-près horizontalement entre le châssis porteur (1) et l'extrémité supérieure de l'axe vertical d'oscillation (3).

3. Remorque selon la revendication 1 ou la revendication 2, caractérisée en ce qu'il est en outre prévu, entre les pièces de la remorque qui peuvent osciller l'une par rapport à l'autre autour de l'axe vertical (3), au moins un vérin hydraulique (8, 8') dans lequel la position réciproque du piston (9, 9') et du cylindre (10, 10') peut être bloquée.

**Fig. 1**

0097 165

Fig. 2

Fig. 3

3